# EUROPEAN PATENT APPLICATION

(11) **EP 1 820 407 A1**
(43) Date of publication of application: **22.08.2007**
(21) Application number: 06003257.0
(22) Date of filing: 17.02.2006
(51) Int. Cl.: A23K 1/18, A23K 1/16

(54) **Method for improving dog food**

(71) Applicant: NESTEC S.A., 1800 Vevey (CH)
(72) Inventor: Perez-Camargo, Gerardo, 80800 Cachy (FR); Bouthegourd, Jean-Christophe, 80110 Mezieres-en-Santerre (FR); Berthe, Geoffroy, 80150 Machiel (FR)
(74) Representative: Rupp, Christian

(57) **Abstract**

A method for preparing dog food which is particularly adapted to a dog according to the present invention comprises the steps of categorising a dog as robust or athletic and adapting the protein and fat content of the food product accordingly.

## Description

### Field of the invention

The present invention relates to the field of dog food, in particular methods for preparing dog food compositions which are particularly well adapted to different categories of dogs. The invention also relates to the use of ingredients in the manufacture of dog foods for specific categories of dogs and to methods of feeding dogs.

### Background art

As most pet owners consider their pets as members of their family, the expectations for pet food to be of a certain standard and to be specifically adapted to the dietary needs of their pets has increased in the last decades.

Various pet food products are well-known in the art. Indeed, dog foods which are adapted to a dog's age or even adapted to the dog's size can be found on the market. For instance, there exist different dog food products depending on whether the food is intended for puppies or for adult dogs. Distinctions can also be found in commercial pet foods depending on the body weight of the pet for which the pet food is intended. Furthermore, food formulations which are breed-specific are for instance disclosed in US6156355.

There are, however, many more variables (other than age and size) which distinguish dogs of different breeds and which affect them differently.

In Aging Cell, 2003, 2, p.265-275, Speakman *et al.* discuss the age-related changes observed in the metabolism and body composition of Papillons, Labrador retrievers and Great Danes and how these affect life expectancy.

Kienzle et al. in Journal of Nutrition, 1991, 121, S39-S40 offer a way to calculate the metabolic body weight in dogs. The influence of breed, body weight, age and gender on energy requirements is also investigated.

Parker et al. in Science, 2004, 304, p.1160-1164 provide a genetic classification of dog breeds into four genetic clusters.

Therefore, although it is acknowledged in the art that dogs and their dietary needs distinguish themselves in many different ways, there still lacks a simple way to provide for dogs' varying needs.

It is therefore an object of the present invention to meet and accommodate the varying needs, in particular the dietary needs of dogs in a simple manner.

It is also an object of the present invention to extend this ability not only to the skilled person but also to the pet owner.

### Summary

Accordingly, this object is achieved by means of the features of the independent claims. The dependent claims develop further the central idea of the present invention.

The invention proposes, in a first aspect, a method for preparing a dog food product adapted to a dog category comprising the steps of categorising the dog for which the product is intended as robust or athletic and adapting the protein and fat content of the dog food product, depending on the dog's category.

More specifically, the dog category can be dependent on the body mass index, the body composition, the resting metabolic rate and the breed of a dog.

According to a second aspect of the invention, the use of dog food ingredients in the manufacture of a dog food having a protein content of 20-30% on a dry matter basis and a fat content lower than 15% on a dry matter basis intended for feeding robust dogs is provided.

Similarly, according to a further aspect of the invention, the use of dog food ingredients in the manufacture of a dog food composition having a protein content of 20-30% on a dry matter basis and a fat content of 15-25% on a dry matter basis intended for feeding athletic dogs is provided.

Finally, a method for feeding dogs, comprising the steps of classifying an individual dog for which the food product is intended as a robust or as an athletic dog and feeding the dog a dog food composition suited to its category is provided.

The invention will now be described in details by mean of an illustrative embodiment.

The percentages indicated in the description relate to percentages by weight except when otherwise stated.

### Detailed description of the invention

The invention provides a method for preparing a dog food nutritionally adapted to a specific dog category. The first step in this method consists in first categorising dogs according to whether they are robust or athletic. This categorisation will be influenced by factors such as, e.g. the body mass index of the dog, the body composition, the resting metabolic rate and the breed of the dog.

Additionally, the genetics differentiation during breeding history can play a role in the categorisation.

### Body mass index

The body mass index is calculated by the following formula: weight (kg) / [height (m)]².

A robust dog will generally have a body mass index greater than 90 kg/m², whereas an athletic dog will have a body mass index lower than 90 kg/m². Examples of typical BMI values for robust dogs or athletic dogs are given in the table below.

| **Robust dogs** | **Athletic dogs** |
|---|---|
| Saint Bernard: 158.2 kg/m² | Greyhound: 54.8 kg/m² |
| Bull dog: 211.5 kg/m² | Irish setter: 61.6 kg/m² |
| Pekingese: 99.6 kg/m² | Fox terrier: 51.8 kg/m² |

### Body composition

There are a number of criteria defining the body composition. For instance, thorax/waist circumference ratio, body surface per kilogram, fat to muscle ratio, fat mass all play a role in determining the body composition.

For instance, a dog having
- a thorax/waist circumference ratio greater than 1.5
- a high body surface per kilogram
- a fat to muscle ratio less than 1
- a fat mass less than 15%, preferably between 10-15% of the total body mass
is considered to be an athletic dog whereas,
an dog having
- a thorax/waist circumference ratio less than 1.5
- a low body surface per kilogram
- a fat to muscle ratio greater than 1
- a fat mass more than 15%, preferably between 15-20% of the total body mass
is considered to be a robust dog.

### Resting metabolic rate

The resting metabolic rate is a measure of the energy utilised when a dog is in a resting state as a function of time. A RMR (resting metabolic rate) greater than 10000 kJ/day characterises an athletic dog, whereas a RMR of less than 10000 kJ/day is typical of robust dogs.
Athletic dogs generally have a RMR which is about 57% higher than the RMR of robust dogs.

### Breed of dogs

Based on the preceding criteria, it has been found, as a general rule, that different breeds can be categorised into robust or athletic. The following tables shows typical examples of breed and the category to which they belong.

| **Robust** | |
|---|---|
| **Breed category** | **Representative breeds** |
| Toy and companion | • Pekingese. |
| | • French Bulldog |
| Scent hounds | • Bloodhound |
| | • Bassett hound |
| | • Beagle |
| Working and guard | • Tibetan Mastiff |
| | • Rottweiler |
| | • St Bernard |
| Retrievers | • Irish water Spaniel |
| | • Labrador Retriever |
| | • Golden retriever |

| **Athletic** | |
|---|---|
| **Breed category** | **Representative breeds** |
| Toy and companion | • Cavalier King Charles Spaniel |
| | • Manchester Terrier |
| | • Yorkshire Terrier |
| Flushing spaniels | • English Springer Spaniel |
| | • Brittany Spaniel |
| Terriers | • Fox terrier |
| | • Airedale terrier |
| | • Cairn terrier |
| Pointers | • English Pointer |
| | • English Setter |
| Sight hounds | • Greyhound |
| Performance dog | • Siberian husky |
| Herding dogs | • Canaan dog |
| | • Old English sheepdog |
| | • German Shepherd |

Categorising a dog into robust or athletic may also be influenced by the breeding history of a dog. For instance, dogs may have a different breeding history and genetic background than the breed category they belong to. As a general rule, dogs having some athletic blood in their breeding history tend to have kept the athletic morphology as a dominant phenotype.

As an example, the great Dane which belongs to the working and guard dog group (and hence should be classified as a robust dog) may be classified as athletic because of its morphology and breeding history (sight hounds blood). It has a clear sight hound type body conformation, i.e. deep chest and thin abdomen.

Additional categorisation criteria may be further applied depending on the age and the body weight. For example, further categories may comprise puppies, adults and seniors depending on whether the dog is less than 1 year old, between 1 and 7 years old and older than 7 years old respectively.

Additionally, depending on the body weight, a dog may be classified as miniature, small, medium, large or giant. While a miniature dog weighs less than 5kg, a small dog weighs between 5kg and 10kg, a medium dog weighs between 10kg and 25kg, a large dog weighs between 25kg and 40kg and a giant dog weighs more than 40kg.

The second step in the method of the present invention is adapting the protein and fat content of a dog food depending on whether a dog is classified as robust or as athletic.

It has been found that robust dogs, due to their low resting metabolic rate are predisposed to being overweight. It has also been found that their spontaneous activity level is low in comparison to athletic dog.

For example, a robust dog will spontaneously engage in mild (e.g. slow walking), moderate (e.g. brisk walking) or intense (e.g. running) activity types.

An athletic dog, in comparison, will mainly be involved in moderate, intense or very intense (e.g. fast running) activities. In general, the athletic dog will be 40% more active per day than a robust dog.

It has therefore been found that a food product high in protein and high in fat is particularly well adapted for athletic dogs. Typically, a dog food product for athletic dogs has 20-30% protein on a dry matter basis and 15-25% fat on a dry matter basis. More particularly, a dog food product having a ratio of energy from protein to energy from fat below 0.80 has been found to be advantageous to athletic dogs.

Indeed, a food product dense in energy from fat will provide an athletic dog with sufficient energy for the moderate to very intense activities (i.e. brisk walk to fast run) in which it spontaneously gets involved. Furthermore, the energy from protein to the energy from fat ratio is found to be advantageous in such a food product for maintaining the lean body mass of athletic dogs.

On the other hand, a particularly well adapted robust dog food composition will have a protein content between 20-30% on a dry matter basis and less than 15% of fat on a dry matter basis. More specifically, the ratio of energy from protein to energy from fat in such a food product is greater than 0.80.

Because of their low resting metabolic rate, such a food composition is ideally adapted to robust dogs, as it will have the effect of limiting the fat intake of robust dogs and therefore their tendency to be overweight.

Functional ingredients may also be used in the methods of the present invention, whether the food product is intended for athletic dogs or for robust dogs. By functional ingredients is meant any ingredient which confers a health benefit to the food to which it is added. These comprise vitamins, prebiotics, probiotics, etc. and mixtures of these.

Additionally, functional ingredients which limit fat accumulation may be added to the robust dog food. These include conjugated linoleic acid (CLA), isoflavones etc. and mixtures of these.

The present invention is also related to the use of dog food ingredients in the manufacture of a dog food having specific protein and fat content depending on whether it is intended for a robust or for an athletic dog.

Typical dog food ingredients which can be used in the preparation of a dog food may comprise meat sources (e.g. chicken, lamb etc.), other protein sources (e.g. dehydrated poultry protein, dried whole egg, etc.), rice, maize, wheat, animal fat, fibre (e.g. beet pulp, oat fibre etc.), oil (e.g. sunflower oil, fish oil etc.), yeast, amino acids, minerals and functional ingredients.

According to the present invention, the ingredients used in the manufacture of a dog food for robust dogs are adjusted so as to provide a dog food having a protein content of 20-30% on a dry matter basis and fat content of less than 15% on a dry matter basis.

Similarly, the ingredients used for athletic dog food are such that they provide a dog food having a protein content of 20-30% on a dry matter basis and fat content of 15-25% on a dry matter basis.

Preferably, the ingredients may be adjusted so as to provide an energy from protein to an energy from fat ratio above 0.80 for robust dog food and an energy from protein to an energy from fat ratio lower than 0.80 for athletic dog food.

When the dog is fed a dog food composition according to a method of the present invention, the feeding recommendations may be adjusted depending on whether the dog is robust or athletic.

Depending on their level of activity (i.e. mild, moderate or intense) and frequency, the robust dogs will require an energy intake (in kilocalories) between 90-120 x (kg of body weight)^{0.75}.

On the other hand, depending on their level of activity (i.e. moderate, intense or very intense), the athletic dogs will require an energy intake (in kilocalories) between 120-150 x (kg of body weight)^{0.75}.

The dog food composition used or resulting from the methods of the present invention may be a dry, moist or semi-moist dog food. By dry dog food is meant a dog food having a water activity lower than 0.6. A semi-moist dog food has a water activity between 0.6 and 0.9 and a moist dog food has a water activity above 0.9.

The present invention offers considerable advantages over methods of the prior art. Indeed, the present invention offers to the skilled person, a simplified way of taking into account many variables which affect the needs of a dog, by categorising dogs into robust or athletic.

Furthermore, the skilled person is now able to provide a food product which is better adapted to the dog than traditional food products.

The present invention also presents an advantageous development of market products since it also enables the pet owner to provide his pet with a more appropriate and well adapted food product.

The present invention will now be illustrated by way of non-limiting example.

### Example

### Example 1

Typical recipes for robust and athletic dogs includes the following components:

| **Robust dog food** | **Athletic dog food** |
|---|---|
| Protein: 25-30% | Protein : 25-35% |
| Fat: 10-15% | Fat : 15-25% |
| Carbohydrate: 40-45% | Carbohydrate : 30-40% |
| Fibre: 1-5% | Fibre : 1-5% |
| Ash: 5-10% | Ash : 5-10% |
| Moisture : 5-10% | Moisture : 5-10% |

## Claims

1. A method for preparing a dog food product adapted to a dog category comprising the steps of:
- Categorising the dog for which the food product is intended as robust or athletic
- Adapting the protein and fat content of the dog food product, depending on the dog's category.

2. The method of claim 1, wherein the robust and athletic categories are dependent on:
- The body mass index
- The body composition
- The resting metabolic rate and
- The breed

3. The method of claim 2, wherein the category is influenced by genetics differentiation during breeding history.

4. The method of claims 1 to 3, wherein a robust dog is selected from a toy dog, a companion dog, a working or guard dog, a scent hound, a retriever having at least one of the following characteristics:
- Body mass index greater than 90kg/m²
- Thorax/waist circumference ratio less than 1.5
- Low body surface/kg
- Fat to muscle ratio greater than 1
- Fat mass greater than 15%
- Resting metabolic rate less than 10000 kJ/day.

5. Method according to claims 1 to 4, wherein the dog food product for robust dogs has a protein content from 20-30% on a dry matter basis and a fat content lower than 15% on a dry matter basis.

6. Method according to claims any of claims 1 to 5, wherein the dog food product for robust dogs has a ratio of energy from protein to energy from fat higher than 0.80.

7. Method according to claims 1 to 6, wherein the dog food product contains functional ingredients that limit fat accumulation.

8. Method of claim 7, wherein the functional ingredients are selected from conjugated linoleic acid (CLA), soy isoflavones, and mixtures thereof.

9. The method of claims 1 to 3, wherein an athletic dog is selected from a toy dog, a companion dog, a herding or a pointing dog, a performance dog, a sight hound, a flushing spaniel, or a terrier having at least one of the following characteristics:
- Body mass index lower than 90kg/m²
- Thorax/waist circumference ratio greater than 1.5
- High body surface/kg
- Fat to muscle ratio less than 1
- Fat mass less than 15%
- Resting metabolic rate of more than 10000 kJ/day.

10. Method according to claim 9, wherein the dog food product for athletic dogs has a protein content of 20-30% on a dry matter basis and a fat content of 15-25% on a dry matter basis.

11. Method according to claims 9 and 10, wherein the dog food product for athletic dogs has a ratio of energy from protein to energy from fat lower than 0.80.

12. Method according to any of the preceding claims, wherein the dog is further categorised as a puppy, adult or senior dog in function of his age.

13. Method according to claim 12, wherein
- A puppy is a dog less than 1 year old
- An adult is a dog between 1 and 7 years old
- A senior is a dog older than 7 years old.

14. Method according to any of the preceding claims, wherein the dog is further categorised as miniature, small, medium, large or giant.

15. A method according to claim 14, wherein
- a miniature dog weighs less than 5 kg,
- a small dog weighs between 5 and 10 kg,
- a medium dog weighs between 10 and 25 kg
- a large dog weighs between 25 and 40 kg
- a giant dog weighs more than 40 kg.

16. Method according to any of the preceding claims, wherein the dog food product is a dry, semi-moist or moist food product.

17. Use of dog food ingredients in the manufacture of a dog food composition having a protein content of 20-30% on a dry matter basis and a fat content lower than 15% on a dry matter basis intended for feeding robust dogs.

18. Use according to claim 17, wherein the ratio of energy from protein to energy from fat in the pet food composition is higher than 0.80.

19. Use according to claims 17 and 18, wherein a robust dog is selected from a toy dog, a companion dog, a working or guard dog, a scent hound, a retriever having at least one of the following characteristics:
- Body mass index greater than 90kg/m²
- Thorax/waist circumference ratio less than 1.5
- Low body surface/kg
- Fat to muscle ratio greater than 1
- Fat mass greater than 15%
- Resting metabolic rate less than 10000 kJ/day.

20. Use of dog food ingredients in the manufacture of a dog food composition having a protein content of 20-30% on a dry matter basis and a fat content of 15-25% on a dry matter basis intended for feeding athletic dogs.

21. Use according to claim 20, wherein the ratio of energy from protein to energy from fat in the pet food composition is lower than 0.80.

22. Use according to claims 20 and 21, wherein an athletic dog is selected from a toy dog, a companion dog, a herding or a pointing dog, a performance dog, a sight hound, a flushing spaniel, or a terrier having at least one of these characteristics:
- Body mass index lower than 90kg/m²
- Thorax/waist circumference ratio greater than 1.5
- High body surface/kg
- Fat to muscle ratio less than 1
- Fat mass less than 15%
- Resting metabolic rate greater than 10000 kJ/day.

23. Use according to claims 17 to 22, wherein the pet food composition is a dry, semi-moist or moist pet food composition.

24. A method for feeding dogs, the method comprising the following steps:
- Classifying an individual dog for which the food product is intended as a robust dog or as an athletic dog,
- Feeding the dog a dog food composition suited for robust dogs or suited for athletic dogs.

25. A method according to claim 24, wherein a robust dog is selected from a toy dog, a companion dog, a working or guard dog, a scent hound, a retriever having at least one the following characteristics:
- Body mass index greater than 90kg/m²
- Thorax/waist circumference ratio less than 1.5
- Low body surface/kg
- Fat to muscle ratio greater than 1
- Fat mass greater than 15%
- Resting metabolic rate less than 10000 kJ/day.

26. A method according to claims 24 and 25, wherein the pet food composition suited for robust dogs has a protein content of 20-30% on a dry matter basis and a fat content of less than 15% on a dry matter basis.

27. A method according to claims 24 to 26, wherein the pet food composition suited for robust dogs has a ratio of energy from protein to energy from fat higher than 0.80.

28. A method according to claim 24, wherein an athletic dog is selected from a toy dog, a companion dog, a herding or a pointing dog, a performance dog, a sight hound, a flushing spaniel, or a terrier having at least one of the following characteristics:
- Body mass index lower than 90kg/m²
- Thorax/waist circumference ratio greater than 1.5
- High body surface/kg
- Fat to muscle ratio less than 1
- Fat mass less than 15%
- Resting metabolic rate greater than 10000 kJ/day.

29. A method according to claim 28, wherein the pet food composition suited for athletic dogs has a protein content of 20-30% on a dry matter basis and a fat content of 15-25% on a dry matter basis.

30. A method according to claims 28 and 29, wherein the pet food composition suited for athletic dogs has a ratio of energy from protein to energy from fat lower than 0.80.

31. A method according to claim 24, said method comprising an additional step of adapting the feeding recommendation to the category of dog and to its energy requirements.

32. A method according to claim 31, wherein a robust dog's energy requirement is between 90-120 x (kilograms of body weight)^{0.75} kilocalories.

33. A method according to claim 31, wherein an athletic dog's energy requirement is between 120-150 x (kilograms of body weight)^{0.75} kilocalories.

34. A method according to claims 24 to 33, wherein the pet food composition dry, moist or semi-moist.

35. A method according to claims 24 to 34, said method being non-therapeutic.
